# EUROPÄISCHE PATENTANMELDUNG

(11) **EP 0 899 908 A1**
(43) Veröffentlichungstag der Anmeldung: **03.03.1999**
(21) Anmeldenummer: 98113220.2
(22) Anmeldetag: 15.07.1998
(51) Int. Cl.: H04L 12/12, H04L 12/10, H04Q 11/04, H04M 19/08, G06F 1/32

(54) **Schaltung zum bedarfsgerechten Ein- und Ausschalten eines Verbrauchers**

(30) Priorität: 29.07.1997 DE 19732675
(71) Anmelder: SIEMENS AKTIENGESELLSCHAFT, 80333 München (DE)
(72) Erfinder: Seidenberg, Stefan, 81739 München (DE)

(57) **Zusammenfassung**

Es ist eine Schaltung zum bedarfsgerechten Ein- und Ausschalten eines Verbrauchers offenbart, der mit einem Datenbus gekoppelt ist. Die Schaltung weist einen Sensor zum Erkennen von Signalaktivität auf dem Datenbus und zum Ausgeben eines entsprechenden Signals auf. Die Schaltung ist gekennzeichnet durch eine erste Schalteinrichtung, die den Verbraucher mit einer vom Datenbus unabhängigen Spannungsquelle verbindet. Beim Erkennen von Aktivität verbindet die Schalteinrichtung den Verbraucher mit der Spannungsquelle. Der Gesamtenergieverbrauch von Schaltung und Verbraucher kann somit minimiert werden.

## Beschreibung

Die Erfindung betrifft eine Schaltung zum bedarfsgerechten Ein- und Ausschalten eines Verbrauchers nach dem Oberbegriff von Patentanspruch 1. Die Erfindung betrifft ferner ein Teilnehmerendgerät für ein Informationsnetz nach Patentanspruch 15.

In einem Informationsnetz gibt es eine Vielzahl von Teilnehmerendgeräten, die zu einem bestimmten Zeitpunkt weder Informationen empfangen noch Informationen senden, weil im Informationsnetz regelmäßig nur ein Bruchteil der angeschlossenen Teilnehmer miteinander in Kommunikation sind und das Informationsnetz letztlich auch derart ausgelegt ist. Viele Teilnehmerendgeräte befinden sich daher in einem Betriebsmodus, bei dem sie zwar nicht aktiv am Datenverkehr teilnehmen, jedoch für die Aufnahme einer Verbindung mit einem anderen Teilnehmer jederzeit bereit sein müssen. Die Teilnehmerendgeräte enthalten elektrische Schaltungen, die auch im Bereitschaftszustand, d. h. in dem zuvor erwähnten Betriebsmodus, Strom verbrauchen. In manchen Informationsnetzen, wie etwa dem Telefonnetz, wird die für die Teilnehmerendgeräte erforderliche Energie über den Netzanschluß dem Teilnehmerendgerät zugeführt. Die Energieaufnahme eines Teilnehmerendgerätes muß daher naturgemäß auf einen niedrigen Wert beschränkt sein. In anderen Informationsnetzen, wie etwa dem Integrated Services Digital Network (ISDN), wird einem Teilnehmerendgerät in bestimmten Konfigurationen vom Informationsnetz keine Energie bereitgestellt. Das Teilnehmerendgerät wird daher von einer separaten Spannungsquelle mit Energie versorgt. Jedoch ist es auch in diesem Fall erstrebenswert, den Energieverbrauch des Teilnehmerendgerätes auf ein Minimum zu reduzieren.

Aus der WO 95/28793 ist eine Vorrichtung bekannt geworden, mit der es möglich ist, den Stromverbrauch eines Telekommunikationsendgeräts zu minimieren, das von der analogen Teilnehmerleitung des Telekommunikationsnetzes mit Strom versorgt wird. Die Schaltung weist eine Einrichtung zur Erfassung eines Klingeltones auf, um eine Spannungsversorgungsschaltung zwischen zwei Betriebsmodi schalten zu können. Die Spannungsversorgungsschaltung weist einen mit unterschiedlichen Frequenzen betreibbaren Oszillator und eine Gleichspannungswandlerschaltung auf. Der Oszillator wird durch die zwischen den Anschlüssen der Teilnehmerleitung anliegende Spannung mit Energie versorgt, die über den Gleichspannungswandler an die Nutzschaltung der Vorrichtung übertragen wird. Eine von der Teilnehmerleitung unabhängige Energieversorgung der Vorrichtung ist somit nicht vorgesehen.

Aus der US 5,379,441 ist ein Bussystem für das ISDN zur Verwendung in privaten Haushalten bekannt geworden. Das System weist einen Detektor zur Erfassung des Signals INFO2 des ISDN auf einer Zweidraht-Teilnehmerleitung auf. Das Signal wird ausgewertet, um es einem bestimmten, an das Bussystem angeschlossenen Teilnehmerendgerät zuzuführen. Dazu werden Relais verwendet, um das vom eingehenden Signal adressierte Teilnehmerendgerät mit dem Bussystem zu verbinden. US 5,379,441 enthält keine Hinweise zum Ein- bzw. Ausschalten eines Teilnehmerendgeräts oder den Aufbau eines INFO2-Detektors.

Das der Erfindung zugrundeliegende technische Problem besteht daher darin, eine Schaltung anzugeben, mit der der durchschnittliche Energieverbrauch eines an einen Datenbus gekoppelten Verbrauchers minimiert werden kann.

Das Problem wird gelöst mit einer Schaltung mit den Merkmalen von Patentanspruch 1. Bevorzugte Ausführungsformen dieser Schaltung sind in den Unteransprüchen angegeben.

In einer bevorzugten Ausführungsform weist die Schaltung zum bedarfsgerechten Ein- und Ausschalten eines Verbrauchers, der mit einem Datenbus gekoppelt ist, einen Sensor auf. Der Sensor ist in der Lage, eine Signalaktivität auf dem Datenbus zu erkennen und, bei vorliegender Aktivität, ein diese Aktivität anzeigendes Signal auszugeben. Die Schaltung ist gekennzeichnet durch eine erste Schalteinrichtung, die den Verbraucher mit einer vom Datenbus unabhängigen Spannungsquelle verbinden kann. Die Verbindung wird durch das vom Sensor kommende Signal veranlaßt. Die Schaltung hat den Vorteil, daß die Vorrichtung, die herkömmlicherweise in einem Bereitschaftszustand fortlaufend die Aktivitäten auf dem Datenbus überwachen müßte, erst dann mit Energie versorgt wird, wenn Aktivität auf dem Datenbus festgestellt wird. Dies ist besonders dann vorteilhaft, wenn der Energieverbrauch des Verbrauchers in seinem Bereitschaftszustand über bestimmten Grenzwerten liegt. Der Gesamtenergieverbrauch von Schaltung und Verbraucher kann mit der Schaltung nach der Erfindung minimiert werden.

In einer besonders bevorzugten Ausführungsform weist die Schaltung eine zweite Schalteinrichtung auf, die bei Verschwinden der Signalaktivität am Sensor den Verbraucher mit der Spannungsquelle verbunden hält. Dies ist besonders dann vorteilhaft, wenn der Sensor nach Verbinden der Vorrichtung mit der Spannungsquelle vom Datenbus getrennt wird und damit das die Aktivität anzeigende Signal verschwinden würde. In einer besonders vorteilhaften Ausgestaltung weist die Schaltung eine dritte Schalteinrichtung auf, die nach Verbinden des Verbrauchers mit der Spannungsquelle die Schaltung vom Datenbus trennt. Das Trennen der Schaltung vom Datenbus hat den Vorteil, daß der Datenverkehr auf dem Datenbus, über einen minimalen Zeitraum hinaus, nicht von der Schaltung und dessen Sensor beeinflußt wird.

In einer weiterhin bevorzugten Ausführungsform der Schaltung weist diese eine Trennschaltung auf, die veranlaßt, daß der Verbraucher bei Anlegen eines Rücksetzsignals an die Trennschaltung wieder von der Spannungsquelle getrennt wird. Dabei ist es besonders vorteilhaft, wenn das Rücksetzsignal vom Verbraucher ausgegeben wird. Es ist damit möglich, daß sich der Verbraucher selbst von seiner Energieversorgung abtrennt.

In einer besonders bevorzugten Ausführungsform weist die erste Schalteinrichtung der Schaltung nach der Erfindung ein Relais auf. Dieses kann elektronisch oder mechanisch ausgeführt sein. Es ist besonders bevorzugt, daß das Relais eine Vielzahl von Schaltern betätigt. Insbesondere ist eine Ausführungsform bevorzugt, bei der die erste, zweite und dritte Schalteinrichtung von einem Relais betätigt werden.

In einer besonders bevorzugten Ausführungsform der Schaltung weist diese als ihren Sensor einen Differenzverstärker auf, dessen Eingangsanschlüsse mit dem Datenbus gekoppelt sind. Der Differenzverstärker ist vorzugsweise mit einer Rückkopplung ausgestattet, die entweder als Gegenkopplung oder als Mitkopplung ausgelegt ist. Bei der Ausführung als Mitkopplung führt dies dazu, daß auch bei nur kurzer Aktivität auf dem Datenbus das Ausgangssignal des Differenzverstärkers auch bei Verschwinden der Aktivität weiter ansteigt und somit die Schalteinrichtung betätigt. Im Falle eines gegengekoppelten Differenzverstärkers ist eine wenigstens während des Einschwingvorgangs der Schaltung vorliegende Aktivität auf dem Datenbus erforderlich, um die Schalteinrichtung zu betätigen. Vorzugsweise wird der Betätigungszeitpunkt der Schalteinrichtung noch dadurch verzögert, daß der Schalteinrichtung ein Tiefpaßfilter vorgeschaltet ist, der den Anstieg des Ausgangssignals des Differenzvertärkers verzögert.

Es ist besonders bevorzugt, daß die Schaltung nach der Erfindung ebenfalls von der vom Datenbus unabhängigen Spannungsquelle mit Spannung versorgt ist. Desweiteren wird besonders bevorzugt, daß der Datenbus ein S₀-Empfangsbus eines ISDN-Teilnehmerendgerätes ist. Die Schaltung ist dann besonders vorteilhaft einzusetzen, weil der S₀-Empfangsbus im ISDN zur Zufuhr von Energie auf das Teilnehmerendgerät nur unter Hinzufügung relativ aufwendiger Übertrager geeignet ist.

Es ist besonders bevorzugt, die Schaltung in einem Teilnehmerendgerät für ein Informationsnetz einzusetzen. Die Teile des Teilnehmerendgeräts, die außerhalb der Schaltung der Erfindung liegen, bilden dann den Verbraucher im Sinne obiger Ausführungen. Dabei wird ganz besonders bevorzugt, daß das Informationsnetz ein Integrated Services Digital Network (ISDN) ist.

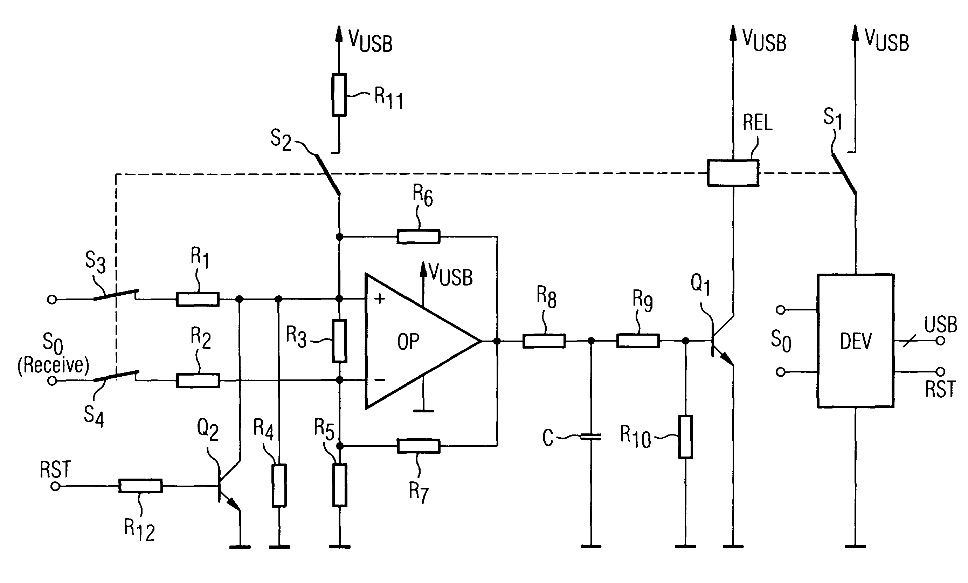

Weitere Vorteile, Merkmale und Anwendungsmöglichkeiten der vorliegenden Erfindung ergeben sich aus der nachfolgenden Beschreibung von Ausführungsbeispielen in Verbindung mit der Zeichnung. In der Zeichnung zeigt die einzige
- Figur 1: ein Ausführungsbeispiel der Schaltung nach der Erfindung in Verbindung mit einem zu schaltenden Verbraucher.

In Figur 1 ist eine zu schaltende Vorrichtung DEV gezeigt, die einerseits Anschlüsse für einen S₀-Bus des ISDN und andererseits Anschlüsse USB für ein PC-Bussystem aufweist. Die Ausgestaltung des S₀-Busses im ISDN ist in der Technik einschlägig bekannt, und es wird diesbezüglich auf die umfangreich vorhandene Literatur verwiesen und auf eine genaue Darstellung an dieser Stelle verzichtet. Insbesondere sind in Figur 1 die für den Anschluß an den S₀-Bus üblicherweise zur galvanischen Trennung erforderlichen Übertrager aus Gründen der Vereinfachung des Schaltbildes nicht dargestellt.

Im S₀-Bus des ISDN sind nur bedingt Möglichkeiten vorgesehen, eine an den S₀-Bus angeschlossene Vorrichtung, insbesondere solche mit einer Versorgungsspannung von 5 V, vom S₀-Bus mit Energie zu versorgen. Dies würde stromkompensierte Übertrager erfordern, die aufwendig und darüberhinaus in ihrer Strombelastbarkeit begrenzt sind. Im übrigen darf der S₀-Bus nicht außerhalb der Spezifikation belastet werden, was insbesondere dann kritisch ist, wenn mehrere Lastkapazitäten am S₀-Bus anliegen. Manche an den S₀-Bus angeschlossenen Vorrichtungen erfordern daher eine vom S₀-Bus unabhängige Energieversorgung.

Die Vorrichtung DEV ist andererseits, wie erwähnt, im bevorzugten Ausführungsbeispiel mit dem PC-Bussystem USB (Universal Serial Bus) verbunden. Im Bussystem USB ist vorgesehen, daß Vorrichtungen, die an diesen Bus angeschlossen sind, vom Bussystem USB aus mit Energie versorgt werden. Die Spezifikationen des Bussystems USB erlauben jedoch der Vorrichtung DEV dem Bussystem USB nur in begrenzter Höhe Energie zu entnehmen. Nach der Erfindung ist daher vorgesehen, eine an das Bussystem USB angeschlossene Vorrichtung DEV vollständig von der Energieversorgung zu trennen, wenn die Vorrichtung DEV gerade nicht in Betrieb ist.

In Figur 1 ist dargestellt, wie die Vorrichtung DEV über einen Schalter S1 mit der im Bussystem USB enthaltenen Spannungsquelle V_{USB} verbunden ist. Wird der Schalter S1 geschlossen, so wird die Vorrichtung DEV mit Spannung versorgt und kann damit ihren Betrieb aufnehmen. Im vorliegenden Ausführungsbeispiel besteht der Betrieb der Vorrichtung DEV in der Vermittlung von Daten zwischen dem S₀-Bus im ISDN und dem PC-Bussystem USB. Typischerweise handelt es sich um einen Kommunikations-IC.

Zur Betätigung des Schalters S1 ist eine Schaltung nach der Erfindung vorgesehen, wie sie in Figur 1 links von der Vorrichtung DEV dargestellt ist. Die Schaltung weist im wesentlichen einen als Operationsverstärker ausgeführten Differenzverstärker OP, der bei einer Signalaktivität auf dem S₀-Empfangsbus im ISDN an seinem Ausgangsanschluß ein entsprechendes Signal liefert, und eine Relais-Schaltung mit einem Ansteuertransistor Q1 und einem Relais REL auf, die im wesentlichen vom Ausgangssignal des Operationsverstärkers OP angesteuert wird. Die beiden Anschlüsse des S₀-Empfangsbusses sind jeweils über einen Öffner S3 und einen Widerstand R1 bzw. über einen Öffner S4 und einen Widerstand R2 mit dem positiven bzw. dem negativen Eingang des Operationsverstärkers OP verbunden. Die Eingangsanschlüsse sind ferner mit einem Widerstand R3 untereinander verbunden und über Widerstände R4 und R5 jeweils mit Masse verbunden. Vorzugsweise haben die Widerstände R1 bis R5 gleiche Widerstandswerte, im bevorzugten Ausführungsbeispiel einen Wert von 47kΩ.

Der Ausgangsanschluß des Operationsverstärkers OP ist über einen Widerstand R6 mit dem positiven Eingang des Operationsverstärkers verbunden, was eine Mitkopplung bewirkt. Der Ausgangsanschluß des Operationsverstärkers OP ist über einen Widerstand R7 mit dem negativen Eingang den Operationsverstärkers OP verbunden, was eine Gegenkopplung bewirkt. Ist R6 kleiner als R7, so ist der Operationsverstärker OP in Mitkopplung geschaltet, und bei nur geringfügigem Eingangssignal steigt das Ausgangssignal aufgrund der Mitkopplung selbständig an (progressives Verhalten). Ist jedoch der Widerstand R7 kleiner als der Widerstand R6, so ist der Operationsverstärker OP in Gegenkopplung geschaltet und das Ausgangssignal des Operationsverstärkers OP geht wieder in den Ruhezustand zurück, wenn am Eingang kein Signal mehr anliegt (degressives Verhalten). Der positive Eingangsanschluß des Operationsverstärkers OP ist darüber hinaus über einen Schließer S2 und einen Widerstand R11 mit der Spannungsquelle V_{USB} verbunden. Wenn der Schalter S2 geschlossen ist, liegt an den Eingängen des Operationsverstärkers OP ein Signal an, das in jedem Falle zu einem hohen Ausgangssignal des Operationsverstärkers OP führt. Der Operationsverstärker OP wird von der Spannungsquelle V_{USB} mit Energie versorgt.

Der Ausgangsanschluß des Operationsverstärkers OP ist mit einer Tiefpaßanordnung bestehend aus einem Widerstand R8 und einem Kondensator C verbunden. Der Kondensator C bildet eine Ladekapazität, die den Anstieg des Ausgangssignals des Operationsverstärkers entsprechend der Dimensionierung des Widerstands R8 und des Kondensators C verzögert. Das Ausgangssignal der Tiefpaßanordnung wird einem Spannungsteiler bestehend aus einem Widerstand R9 und einem Widerstand R10 zugeführt. Die am Spannungsteiler abgegriffene Spannung wird schließlich dem Steueranschluß eines Transistors Q1 zugeführt. Im bevorzugten Ausführungsbeispiel handelt es sich dabei um einen npn-Bipolartransistor, dessen Emitter mit Masse verbunden ist. Die kollektorseitige Laststrecke des Transistors Q1 ist über die Steueranschlüsse des Relais REL mit der Spannungsversorgung V_{USB} verbunden. Das Relais REL weist dabei einen nicht näher dargestellten Innenwiderstand auf. Es betätigt die Schließer S1 und S2 und die Öffner S3 und S4.

Die Schaltung nach Figur 1 weist ferner eine Trennschaltung auf, die aus einem Transistor Q2 und einem Widerstand R12 gebildet ist. Die Laststrecke des Transistors Q2 ist zwischen den positiven Eingangsanschluß des Operationsverstärkers OP und Masse geschaltet. Der Widerstand R12 ist an seinem ersten Anschluß mit dem Steueranschluß des Transistors Q2 verbunden. Der Transistor Q2 besteht im bevorzugten Ausführungsbeispiel ebenfalls aus einem npn-Bipolartransistor. Am zweiten Anschluß des Widerstands R12 kann ein Rücksetzsignal angelegt werden, das dazu führt, daß der Transistor Q2 durchschaltet und somit der positive Eingangsanschluß des Operationsverstärkers OP auf Masse gezogen wird. Im bevorzugten Ausführungsbeispiel wird das Rücksetzsignal RST vom Verbraucher DEV ausgegeben.

Wie erwähnt, kann der Operationsverstärker OP in einem degressiven oder einem progressiven Verhalten konfiguriert werden. Bei progressivem Verhalten, d. h. R6 ist kleiner als R7, führt eine nur kurz anliegende Aktivität am S₀-Empfangsbus dazu, daß das Ausgangssignal des Operationsverstärkers OP ansteigt. Mit Verzögerung steigt auch das Ansteuersignal am Steueranschluß des Transistors Q1. Der Transistor Q1 schaltet schließlich durch, so daß das Relais REL, das elektronisch oder mechanisch ausgeführt sein kann, anzieht und dadurch den Schließer S1 betätigt. Dadurch wird der Verbraucher DEV mit der Versorgungsspannung V_{USB} verbunden und kann den Betrieb aufnehmen. In dieser Konfiguration ist der Schließer S2 nicht erforderlich, weil das Ausgangssignal des Operationsverstärkers OP auch bei Verschwinden der Aktivität am S₀-Empfangsbus auf einem hohen Pegel verbleibt, somit das Relais REL angezogen bleibt und der Verbraucher über den Schließer S1 mit der Versorgungsspannung V_{USB} verbunden bleibt.

In der degressiven Konfiguration folgt das Ansteuersignal am Steueranschluß des Transistors Q1 im wesentlichen der Aktivität auf dem S₀-Empfangsbus. Wenn die Aktivität verschwindet, beispielsweise weil der Verbraucher gerade auf dem S₀-Sendebus sendet, verschwindet auch das Ansteuersignal am Steueranschluß des Transistors Q1, das Relais REL fällt wieder ab, und der Schließer S1 öffnet wieder. Der Verbraucher wurde auf diese Art und Weise wieder von der Versorgungsspannungsquelle getrennt. Um dies zu verhindern, ist bei der degressiven Konfiguration der Schließer S2 vorgesehen, der den positiven Eingangsanschluß des Operationsverstärkers OP über den Widerstand R11 mit der Versorgungsspannung V_{USB} verbindet. Dies führt dazu, daß an den Eingangsanschlüssen des Operationsverstärkers OP eine ausreichende Spannungsdifferenz verbleibt, so daß der Transistor Q1 im durchgesteuerten Zustand verbleibt und somit das Relais REL angezogen bleibt. Der Schließer S2 bewirkt somit eine Selbsthaltung der Schaltung, und der Verbraucher DEV bleibt auch bei der degressiven Konfiguration dauerhaft mit der Versorgungsspannungsquelle V_{USB} verbunden. Die degressive Konfiguration ist besonders vorteilhaft, weil dabei störende Peaks unterdrückt werden.

Wenn der Verbraucher, der typischerweise eine Kommunikationsschaltung aufweist, die Kommunikation mit dem S₀-Bus im ISDN beendet hat, gibt er an seinem Anschluß RST ein hochpegeliges Signal aus, das über den Widerstand R12 an den Steueranschluß des Transistors Q2 geführt wird. Der Transistor Q2 schaltet damit durch und der positive Eingangsanschluß des Operationsverstärkers OP wird im wesentlichen auf Masse gezogen. Damit sinkt auch der Pegel am Ausgangsanschluß des Operationsverstärkers OP und mit verzögerter Wirkung auch der Pegel am Steueranschluß des Transistors Q1. Der Transistor Q1 öffnet schließlich seine Laststrecke, das Relais REL fällt ab, und die Schalter S1 und S2 werden geöffnet. Die Schaltung kehrt dann wieder in ihren Ruhezustand zurück, in dem sich die Schaltung in einem Bereitschaftszustand befindet.

Im Ausführungsbeispiel der Schaltung nach der Erfindung sind darüber hinaus die Öffner S3 und S4 vorgesehen. Mit den Öffnern S3 und S4 wird die Schaltung in dem Augenblick vom S₀-Empfangsbus getrennt, in dem der Verbraucher DEV mit der Versorgungsspannungsquelle V_{USB} verbunden wird und damit seinen Betrieb aufnimmt. Das Trennen der Schaltung vom S₀-Empfangsbus kann wünschenswert sein, wenn die Schaltung das Verhalten des S₀-Empfangsbusses zu sehr verfälschen würde. Wie in Figur 1 dargestellt, werden die Schließer S1 und S2 und die Öffner S3 und S4 gemeinsam von dem Relais REL betätigt. Die Schaltung der Erfindung erkennt eingehende Anrufe am ISDN-Bus (sogenannte INFO-Signale auf dem S₀-Empfangsbus bzw. auf dem T-Bus des ISDN) und regt damit ein Relais an, das einen Verbraucher einschaltet. Der Verbraucher ist beispielsweise ein ISDN-fähiges Gerät, insbesondere ein Kommunikationsschaltungs-IC. Die Ansprechempfindlichkeit der Schaltung ist über die Dimensionierung des dem Steueranschluß des Transistors Q1 vorgeschalteten Tiefpasses und Spannungsteiler einstellbar.

In der degressiven Konfiguration fällt die Schaltung nach der Erfindung von sich aus in den Ruhezustand zurück, wenn der Datenverkehr auf der ISDN-Empfangsleitung verschwindet (d. h., es besteht keine Verbindung mehr oder die Verbindung wurde abgebaut). Wird der Verbraucher auch bei Verschwinden der Aktivität auf dem ISDN-Empfangsbus gehalten, wie es in der progressiven Konfiguration oder in der degressiven Konfiguration mit Selbsthalteschalter S2 der Fall ist, so wird das Ausschalten des Verbrauchers durch ein Rücksetzsignal RST ausgelöst, das entweder von außen anlegbar ist oder vom Verbraucher selbst ausgegeben wird. Der Verbraucher kann sich somit selbst von seiner Spannungsquelle V_{USB} trennen. Im Bereitschaftszustand wird somit die Spannungsquelle V_{USB} nur durch den Betrieb der Schaltung, d. h. im wesentlichen durch den Ruhestrom des Operationsverstärkers OP, belastet.

## Patentansprüche

1. Schaltung zum bedarfsgerechten Ein- und Ausschalten eines Verbrauchers (DEV), der mit einem Datenbus (S₀) gekoppelt ist, mit einem Sensor (OP) zum Erkennen von Signalaktivität auf dem Datenbus (S₀) und zum Ausgeben eines entsprechenden Signals,
**gekennzeichnet durch**
eine erste Schalteinrichtung (Q1, REL, S1) zum Verbinden des Verbrauchers mit einer vom Datenbus (S₀) unabhängigen Spannungsquelle (V_{USB}), wobei beim Erkennen von Aktivität die Schalteinrichtung (Q1, REL, S1) den Verbraucher mit der Spannungsquelle (V_{USB}) verbindet.

2. Schaltung nach Patentanspruch 1,
**gekennzeichnet durch**
eine zweite Schalteinrichtung (Q1, REL, S2, R11), die bei Verschwinden der Signalaktivität am Sensor (OP) den Verbraucher (DEV) mit der Spannungsquelle (V_{USB}) verbunden hält.

3. Schaltung nach einem der Patentansprüche 1 oder 2,
**gekennzeichnet durch**
eine dritte Schalteinrichtung (Q1, REL, S3, S4), die nach Verbinden des Verbrauchers (DEV) mit der Spannungsquelle (V_{USB}) die Schaltung vom Datenbus (S₀) trennt.

4. Schaltung nach einem der vorhergehenden Patentansprüche,
**gekennzeichnet durch**
eine Trennschaltung (Q2, R12), die den Verbraucher (DEV) bei Anlegen eines Rücksetzsignals (RST) wieder von der Spannungsquelle (V_{USB}) trennt.

5. Schaltung nach Patentanspruch 4,
**dadurch gekennzeichnet**, daß
das Rücksetzsignal (RST) vom Verbraucher (DEV) ausgegeben wird.

6. Schaltung nach einem der vorhergehenden Patentansprüche,
**dadurch gekennzeichnet**, daß
die erste Schalteinrichtung ein Relais (REL) aufweist.

7. Schaltung nach Patentanspruch 6,
**dadurch gekennzeichnet**, daß
das Relais elektronisch ausgeführt ist.

8. Schaltung nach Patentanspruch 6,
**dadurch gekennzeichnet**, daß
das Relais mechanisch ausgeführt ist.

9. Schaltung nach einem der Patentansprüche 6 bis 8,
**dadurch gekennzeichnet**, daß
das Relais eine Vielzahl von Schaltern betätigt.

10. Schaltung nach einem der vorhergehenden Patentansprüche,
**dadurch gekennzeichnet**, daß
der Sensor einen Differenzverstärker (OP) aufweist, dessen Eingangsanschlüsse mit dem Datenbus (S₀) verbunden sind.

11. Schaltung nach Patentanspruch 10,
**dadurch gekennzeichnet**, daß
der Differenzverstärker (OP) eine Mitkopplung aufweist.

12. Schaltung nach Patentanspruch 10,
**dadurch gekennzeichnet**, daß
der Differenzverstärker (OP) eine Gegenkopplung aufweist.

13. Schaltung nach einem der vorhergehenden Patentansprüche,
**dadurch gekennzeichnet**, daß
der Schalteinrichtung ein Tiefpaßfilter vorgeschaltet ist.

14. Schaltung nach einem der vorhergehenden Patentansprüche,
**dadurch gekennzeichnet**, daß
die Schaltung von der Spannungsquelle (V_{USB}) mit Spannung versorgt ist.

15. Schaltung nach einem der vorhergehenden Patentansprüche,
**dadurch gekennzeichnet**, daß
der Datenbus (S₀) ein S₀-Emfangsbus eines ISDN-Teilnehmerendgerätes ist.

16. Teilnehmerendgerät für ein Informationsnetz, wobei das Teilnehmerendgerät eine Schaltung nach einem der vorhergehenden Patentansprüche aufweist und wobei der Verbraucher durch die übrigen Teile des ISDN-Teilnehmerendgerätes gebildet wird.

17. Teilnehmerendgerät nach Patentanspruch 15,
**dadurch gekennzeichnet**, daß
das Informationsnetz ein ISDN ist.
